# EUROPÄISCHE PATENTSCHRIFT

(11) **EP 1 182 219 B1**
(45) Veröffentlichungstag und Bekanntmachung des Hinweises auf die Patenterteilung: **23.11.2005**
(21) Anmeldenummer: 01118951.1
(22) Anmeldetag: 04.08.2001
(51) Int. Cl.: C08G 18/10, C08G 18/32

(54) **Verfahren zur Herstellung von kompakten, transparenten Schuhteilen**
Process for the preparation of compact transparent shoe parts
Procédé pour la préparation de pièces de chaussure transparentes et compactes

(30) Priorität: 23.08.2000 DE 10041414
(43) Veröffentlichungstag der Anmeldung: 27.02.2002
(73) Patentinhaber: BASF Aktiengesellschaft, 67056 Ludwigshafen (DE)
(72) Erfinder: Seiferth, Christa, 80939 München (DE); Schwarz, Marc, 82140 Olching (DE); Stadler, Edmund, Dr., 96142 Hollfeld (DE)

(56) Entgegenhaltungen:
- EP-A- 0 009 111
- WO-A-00/14137
- US-A- 2 620 516
- US-A- 5 470 935

## Beschreibung

Die Erfindung betrifft Verfahren zur Herstellung von kompakten, transparenten Schuhteilen auf der Basis von Polyisocyanat-Polyadditionsprodukten, beispielsweise Polyurethanen, Polyisocyanuraten und/oder Polyharnstoffen, insbesondere Polyurethanen und Harnstoffstrukturen, durch Umsetzung von (a) Isocyanaten mit (b) gegenüber Isocyanaten reaktiven Verbindungen. Des weiteren bezieht sich die Erfindung auf kompakte, transparente Schuhteile, die nach diesem Verfahren herstellbar sind.

Kompakte Polyisocyanat-Polyadditionsprodukte, im Folgende auch als Produkte bezeichnet, und deren Herstellung sind allgemein bekannt und in der Fachliteratur vielfältig beschrieben. So beschreiben WO 96/23827, DE-A 198 11 289 und DE-A 198 35 113 kompakte, transparente Polyurethane zur Herstellung von Scheiben und Beschichtungen für Immobilien, Automobile oder Flugzeuge. Für die Herstellung von Schuhen kommen üblicherweise geschäumte oder auch kompakte (z.B. rutschfeste) Produkte (beispielsweise als Einlageteile) Produkte zum Einsatz, die keine Transparenz aufweisen.

Für eine Anwendung in Schuhen sind diese bekannten transparenten Lösungen allerdings nicht vorteilhaft, da es sich bei den offenbarten Produkte um harte Materialien handelt, denen es an einer gewünschten Flexibilität mangelt.

Der vorliegenden Erfindung lag daher die Aufgabe zugrunde, Verfahren zur Herstellung von kompakten, transparenten Schuhteilen auf der Basis von Polyisocyanat-Polyadditionsprodukten durch Umsetzung von (a) Isocyanaten mit (b) gegenüber Isocyanaten reaktiven Verbindungen zu entwickeln, nach dem Produkte herstellbar sind, eine ausreichende Flexibilität aufweisen, abriebfest und rutschfest sind. Insbesondere sollten die Schuhteile durch Gießverfahren auf üblichen Anlagen herstellbar sein und besonders bevorzugt eine Shore A Härte von 40 bis 45 aufweisen.

Diese Aufgabe wurde erfindungsgemäß dadurch gelöst, daß man zur Herstellung mindestens eine aromatische organische Verbindung (i) mit mindestens zwei primären Aminogruppen einsetzt.

Unter dem Ausdruck "Schuhteile" sind in dieser Schrift jegliche Bestandteile von Schuhen zu verstehen, insbesondere Sohlen und/oder Einleger auf oder in die Sohle, beispielsweise im Ballen- und/oder Fersenbereich. Bei den Sohlen handelt es sich bevorzugt um dünne, bevorzugt mit einer Dicke von 1 bis 4 mm, transparente Sohlen, die bevorzugt in einem weiteren Arbeitsschritt mit einem gängigen Polyurethanschaum hinterschäumt werden. Unter dem Ausdruck "Schuhteile" sind somit im engeren Sinne ausschließlich die kompakten, transparenten Formteile zu verstehen. Die besonders bevorzugten Formkörper enthaltend sowohl die kompakten, transparenten Schuhteile und daran haftend Schaumstoffe fallen in ihrer Gesamtheit nicht unter die Definition der Schuhteile. Treibmittel kommen zur Herstellung des Polyurethanschaums, der in den Formkörpern zusammen mit den Schuhteilen enthalten ist, zum Einsatz, nicht aber bei der Herstellung der kompakten Schuhteile.

Die Herstellung von Polyisocyanat-Polyadditionsprodukten ist allgemein bekannt und vielfältig beschrieben. Sie erfolgt üblicherweise durch Umsetzung von (a) Isocyanaten mit (b) gegenüber Isocyanaten reaktiven Verbindungen. Bevorzugt wird die Umsetzung in Gegenwart von (c) Katalysatoren und/oder (d) Hilfsstoffen durchgeführt.

Die erfindungswesentlichen aromatischen Verbindungen (i), die mindestens zwei primäre Aminogruppen aufweisen, fallen unter die Definition der gegenüber Isocyanaten reaktiven Verbindungen.

Als (i) können allgemein bekannte aromatische Amine eingesetzt werden, die mindestens zwei primäre Aminogruppen aufweisen und bevorzugt ein Molekulargewicht von 108 bis 1000 g/mol aufweisen, beispielsweise 2,4- und/oder 2,6-Toluylendiamin (TDA), 4,4'-, 2,4'- und/oder 2,2'-Diphenylmethandiamin (MDA) und/oder bevorzugt 4,4'-Methylenbis(2,6-diisopropylanilin). Aber auch weitere aromatische Amine mit mindestens zwei primären Aminogruppen kommen in Frage, beispielsweise allgemein Diamine auf der Basis von Benzol, Toluol und/oder Naphthalin, wobei die aromatischen Systeme alkyliert sein können oder auch verschiedene oder gleiche aromatische Systeme über Alkylengruppen verbunden vorliegen können und die Aminogruppen sowohl direkt am aromatischen System als auch über geradkettige oder verzweigte Alkylengruppen am aromatischen System gebunden sein können.

Durch den Einsatz von (i), das üblicherweise in einer Menge von von 0,1 Gew.-% bis 10 Gew.-%, bevorzugt 1 Gew.-% bis 9 Gew.-%, besonders bevorzugt 6 bis 8 Gew.-%, jeweils bezogen auf das Gewicht der insgesamt eingesetzten gegenüber Isocyanaten reaktiven Verbindungen (b), eingesetzt wird, kann insbesondere eine Kristallisation innerhalb des Polyisocyanat-Polyadditionsproduktes verhindert werden und somit eine Tranzparenz des Systems erreicht werden.

Es mußte eine neue Rezeptur entwickelt werden, da in den bisherigen Systemen immer Kettenverlängerer eingesetzt werden, die eine weitreichende Teilkristallisation des Systems bewirken. Teilkristalline Stoffe sind aber nicht transparent. Um die unerwünschte Kristallisation zu verhindern, werden daher in der Polyolkomponente enthaltend die gegenüber Isocyanaten reaktiven Verbindungen (b), die erfindungsgemäßen Kettenverlängerer, bevorzugt 4,4'-Methylenbis(2,6-diisopropylanilin) (erhältlich als Lonzacure M-DIPA) eingesetzt. Die aromatischen Kettenverlängerer, insbesondere 4,4'-Methylenbis(2,6- diisopropylanilin) verhindern aufgrund ihrer sterischen Form die Ausbildung großer kristalliner Bereiche im PU Schaum. Bleiben diese kristalinen Bereiche sehr klein (kleiner als ¼ der Wellenlänge des sichtbaren Lichts), erhält man transparente Produkte. Auf den Zusatz weiterer Cokettenverlängerer und anderer Zusatzstoffe kann bevorzugt verzichtet werden.

Als Isocyanate (a) kommen die an sich bekannten aromatischen, araliphatischen, aliphatischen und/oder cycloaliphatischen organischen Isocyanate, bevorzugt Diisocyanate in Frage. Im einzelnen seien beispielhaft genannt: Hexamethylendiisocyanat-1,6 (HDI), 1-Isocyanato-3,3,5-trimethyl-5-isocyanatomethylcyclohexan (IPDI), 2,4- und 2,6-Toluylendiisocyanat (TDI) und die entsprechenden Isomerengemische, 4,4'-, 2,4'- und 2,2'-Diphenylmethandiisocyanat (MDI) und die entsprechenden Isomerengemische, Polyphenylpolymethylen-polyisocyanate, Mischungen aus 4,4'-, 2,4'- und 2,2'-Diphenylmethandiisocyanaten und Polyphenylpolymethylen-polyisocyanaten (Roh-MDI) und Mischungen aus Roh-MDI und Toluylendiisocyanaten. Außerdem können Mischungen enthaltend mindestens zwei der genannten Isocyanate als (a) eingesetzt werden.

Die Isocyanate können vor ihrem Einsatz gegebenenfalls modifiziert vorliegen, beispielsweise können Isocyanurat-, Biuret-, Ester-, Harnstoff-, Allophanat-, Carbodiimid-, Uretdion- und/oder Urethangruppen, letztere im Folgenden auch als Urethangruppenmodifiziert bezeichnet, enthaltende Di- und/oder Polyisocyanate in dem erfindungsgemäßen Verfahren eingesetzt werden. Im einzelnen kommen beispielsweise in Betracht: Urethangruppen enthaltende organische Polyisocyanate mit NCO-Gehalten von 50 bis 15 Gew.-%, vorzugsweise von 35 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethenglykole, -triole und/oder -tetrole.

Geeignet sind auch NCO-Gruppen enthaltende Prepolymere mit NCO-Gehalten von 25 bis 3,5 Gew.-%, vorzugsweise von 10 bis 5 Gew.-%, bezogen auf das Gesamtgewicht, hergestellt aus den beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat. Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gegebenenfalls gemischt werden.

Besonders bevorzugt werden als (a) 4,4'-, 2,4'- und/oder 2,2'-Diphenylmethandiisocyanat (MDI) eingesetzt, besonders bevorzugt 4,4'-MDI, und/oder ein Prepolymer auf der Basis von MDI und einem Polyether mit einer Hydroxylzahl von 20 bis 40 mgKOH/g und einem Molekulargewicht von 3500 bis 5000, bevorzugt 3900 bis 4200, bevorzugt auf der Basis von Polyoxypropylenglykol bevorzugt mit 20 % Polyoxyethylenglykol als Endblock, wobei der Polyether bevorzugt 2 freie Hydroxylgruppen aufweist.

Als (b) gegenüber Isocyanten reaktive Verbindungen (b) können zusätzlich zu (i) beispielsweise allgemein bekannte Verbindungen mit einem Molekulargewicht von 60 bis 8000 g/mol und einer Funktionalität gegenüber Isocyanaten von 2 bis 8, bevorzugt 2 bis 3 eingesetzt werden, beispielsweise Polyole mit einem Molekulargewicht von 1000 bis 8000 g/mol, z.B. Polyetherpolyole, Polyesterpolyole, Polyetherpolyesterpolyole, bevorzugt Polyetherpolyole, und/oder Diole, Triole und/oder Polyole mit Molekulargewichten kleiner 1000 eingesetzt werden. Bevorzugt werden zusätzlich zu den erfindungsgemäßen Verbindungen (i) keine weiteren gegenüber Isocyanaten reaktiven Verbindungen mit einem Molekulargewicht kleiner 1000 eingesetzt, da diese zu kristallinen Strukturen im Produkt führen können, die deren Transparenz herabsetzen. Bezüglich der Schaumstoffe, die sich bevorzugt haftend an die erfindungsgemäßen Schuhteile anschließen, brauchen die erfindungsgemäßen Amine (i) nicht eingesetzt werden. Als Komponente (b) können zur Herstellung der Schaumstoffe allgemein übliche gegenüber Isocyanaten reaktive Verbindungen eingesetzt werden, beispielsweise alle eingangs dargestellten.

Als Katalysatoren (c) zur Herstellung der Produkte können gegebenenfalls allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 2 Gew.-%, insbesondere 0,05 bis 2 Gew.-%, bezogen auf das Gewicht der insgesamt eingesetzten gegenüber Isocyanaten reaktiven Verbindungen (b), verwendet wird, beispielsweise tertiäre Amine und/oder Metallsalze, beispielsweise anorganische und/oder organische Verbindungen des Zinns in üblichen Oxidationsstufen des Metalls.

Als Hilfsstoffe (d) können gegebenenfalls übliche Substanzen in dem erfindungsgemäßen Verfahren verwendet werden. Genannt seien beispielsweise oberflächenaktive Substanzen, Füllstoffe, Farbstoffe, Pigmente, Flammschutzmittel, Hydrolyseschutzmittel, fungistatische und bakteriostatisch wirkende Substanzen sowie UV-Stabilisatoren und Antioxidantien, soweit diese die Transparenz der Produkte nicht beeinträchtigen. Dies kann anhand einfacher Routineexperimente ermittelt werden. Möglich ist auch der Einsatz von Pigmenten und/oder Farbstoffen um getönte/farbige Formkörper zu erhalten. Bevorzugt werden, soweit Farbstoffe eingesetzt werden, solche auf Polyolbasis verwendet. Insbesondere der Einsatz von Antioxidantien und UV-Schutzmitteln in dem erfindungsgemäßen Verfahren kann für viele Anwendungsgebiete der erfindungsgemäßen, transparenten Polyisocyanat-Polyadditionsprodukte von Vorteil sein, da durch Zusatz dieser Stoffe ein Vergilben, Verfärben oder Verspröden der Produkte verhindert werden kann. Als UV-Stabilisatoren können beispielsweise die in der EP-A 712 887 auf der Seite 4, Zeilen 10 bis 20, genannten Verbindungen eingesetzt werden. Als Antioxidantien können beispielsweise die in EP-A 712 887, Seite 4, Zeilen 21 bis 28, beschriebenen Substanzen verwendet werden. Geeignete Pigmente sind beispielsweise ebenfalls in EP-A 712 887 auf der Seite 4, Zeilen 29 bis 37 offenbart.

Als Treibmittel (e) zur Herstellung der Schaumstoffe auf Basis der Polyisocyanat-Polyadditionsprodukte können die in der Polyurethanherstellung üblichen Treibmittel verwendet werden.

Geeignet sind beispielsweise Wasser und/oder niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden. Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), zufriedenstellende Ergebnisse. Die einzusetzenden Mengenverhältnisse sind dem Fachmann allgemein bekannt.

Zur Herstellung der erfindüngsgemäßen Produkte werden die Isocyanate (a) und die gegenüber Isocyanaten reaktiven Verbindungen (b) bevorzugt in solchen Mengen zur Umsetzung gebracht, daß das Äquivalenzverhältnis von NCO-Gruppen von (a) zur Summe der reaktiven Wasserstoffatome von (b) 0,95 bis 1,3 : 1, bevorzugt 1 bis 1,2 : 1 und insbesondere 1 bis 1,15 : 1, beträgt. Falls die Polyurethanformkörper zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt. Bevorzugt basieren die Schuhteile auf Polyurethanen, die Harnstoffstrukturen enthalten.

Die Produkte werden üblicherweise nach dem bekannten one-shot oder dem bevorzugten und ebenfalls bekannten Prepolymerverfahren hergestellt.

Bei dem bekannten Prepolymerverfahren wird in einem ersten Schritt üblicherweise aus (a) und im Unterschuß (b) ein Isocyanatgruppen-aufweisendes Prepolymer hergestellt, das anschließend mit weiterem (b) zu den gewünschten Produkten umgesetzt wird.

Bei dem one-shot Verfahren erfolgt die Umsetzung der Komponenten (a), (b) und gegebenenfalls (c) und/oder (d) zum Produkt in einem Schritt. Dabei hat es sich vorteilhaft erwiesen, nach dem Zweikomponentenverfahren zu arbeiten und die Komponenten (b) und gegebenenfalls die Katalysatoren (c) und/oder Hilfsstoffe (d) in der Komponente (A) zu vereinigen und als Komponente (B) die Isocyanate (a) zu verwenden.

Die Umsetzung zum Produkt wird nach allgemein bekannten Verfahren, beispielsweise durch Handguß, durch Hochdruck- oder bevorzugt Niederdruckmaschinen, oder durch RIM-Verfahren (reaction-injection-molding) in geschlossenen oder bevorzugt offenen Formwerkzeugen, beispielsweise metallischen Formwerkzeugen, durchgeführt. Geeignete PU-Verarbeitungsmaschinen sind handelsüblich erhältlich (Z.B. Fa. Elastogran, Isotherm, Hennecke, Kraus Maffai u.a.). Man kann die Komponenten vor der Verarbeitung durch Anlegen von Vakuum (1-759 Torr) entgasen, um blasenfreie Teile zu erhalten. Um Blasen-freie, kompakte, transparente Schuhteile zu erhalten, wird bevorzugt nicht durch Anlegen von Vakuum entgast, sondern eine kleine Mischkammer mit langem Auslaufrohr eingesetzt, ein "Coating-Rührer" (nicht fördernd), kleine Austragsmengen gefahren und das Rührwerks auf den Vorratsbehältern für die Rohstoffe ausgeschaltet.

Bevorzugt erfolgt die Herstellung mit allgemein bekannten Niederdruckmaschinen in offenen Formwerkzeugen.

Die Ausgangskomponenten werden üblicherweise in Abhängigkeit vom Anwendungsfall bei einer Temperatur von 0 bis 100°C, vorzugsweise von 20 bis 80°C, insbesondere 25 bis 30°C gemischt und in das Formwerkzeug eingebracht. Die Vermischung kann, wie bereits dargelegt wurde, mechanisch mittels eines Rührers oder einer Rührschnecke durchgeführt werden. Die Reaktionstemperatur in dem Formwerkzeug, d.h. die Temperatur, bei die Umsetzung erfolgt, ist üblicherweise >40°C, bevorzugt 45°C bis 100°C, insbesondere 45 bis 55°C. Die Umsetzung ist üblicherweise nach einer Zeit von 0,5 bis 6 Minuten soweit abgeschlossen, daß das Produkt aus der Form entnommen werden kann.

Bevorzugt erfolgt das Verfahren derart, daß man die Schuhteile mit einer 2-Komponenten-Niederdruck Gießmaschine herstellt.

Als B-Komponete kommt bevorzugt ein Prepolymer zum Einsatz, die A-Komponente stellt bevorzugt ein Gemisch aus gegenüber Isocyanaten reaktiven Verbindungen (b), Katalysatoren (d) und gegebenenfalls Hilfsstoffen (d) dar. Die A- und B-Komponente werden bevorzugt in der Mischkammer durch einen Rührer vermischt.

Die Form wird bevorzugt nach dem Eingießen des Ausgangskomponente nicht geschlossen. Bevorzugt wird 1 bis 5 Minuten nachdem die Ausgangskomponenten für die erfindungsgemäßen Schuhteile in die Form gegossen wurden in der gleichen Form auf die im ersten Schritt hergestellten Schuhteile in einem zweiten Schritt weitere Ausgangskomponenten zur Herstellung eines mit den Schuhteilen verbundenen Schaumstoffes auf der Basis von Polyisocyanat-Polyadditionsprodukten gegeben und die Form geschlossen. Der Vorteil, daß der erste Schritt zur Herstellung der Schuhteile in einer offenen Form durchgeführt wird, liegt darin, daß keine Formtrennmittel auf die Kontaktfläche zwischen der offenen Seite der Form und den Schuhteilen aufgebracht werden müssen. Zusätzlich zu der Einsparung müssen diese Trennmittel vor dem bevorzugten zweiten Arbeitsschritt zur Herstellung des Schaumstoffes auch nicht von den Schuhteilen entfernt werden, um eine ausreichende Haftung zwischen den Schuhteilen und dem Schaumstoff zu erreichen. Würden bereits die Schuhteile in einer geschlossenen hergestellt, müßte vor dem Anschäumen mit Schuhschaum das Formentrennmittel entfernt werden, da sonst keine Haftung entsteht.

Bevorzugt sind somit Verfahren zur Herstellung von Schuhteilen enthaltend kompakte, transparente Schuhteile auf der Basis von Polyisocyanat-Polyadditionsprodukten sowie daran haftend Schaumstoffe auf der Basis von Polyisocyanat-Polyadditionsprodukten, bevorzugt mit einer Dichte von 350 bis 850 g/l hinsichtlich der Schaumstoffe, wobei man in einem ersten Schritt durch Umsetzung von (a) Isocyanaten mit (b) gegenüber Isocyanaten reaktiven Verbindungen enthaltend mindestens eine aromatische organische Verbindung (i) mit mindestens zwei primären Aminogruppen in einer offenen Form mittels einer Niederdruck-Gießmaschine kompakte, transparente Schuhteile herstellt und anschließend in einem zweiten Schritt durch Umsetzung von (a) Isocyanaten mit (b) gegenüber Isocyanaten reaktiven Verbindungen in Gegenwart von (e) Treibmitteln in einer geschlossenen Form mittels einer Niederdruck-Gießmaschine haftend an die kompakten, transparenten Schuhteile einen Schaumstoff auf der Basis von Polyisocyanat-Polyadditionsprodukten herstellt.

Bevorzugt wird A-Komponente zur Herstellung der transparenten, kompakten Schuhteile eingesetzt:
- 70 bis 80 Gew.-%: eines Polyoxypropylenglykol-Diols mit 20 % Polyoxyethylenglykol Endblock und einem Molekulargewicht von 4000 g/mol,
- 10 bis 20 Gew.-%: eines Polyoxypropylenglykol-Triols mit 20 % Polyoxyethylenglykol Endblock und einem Molekulargewicht von 6000 g/mol,
- 1 bis 9 Gew.-%: 4,4'-Methylenbis(2,6-diisopropylanilin)
- 0,1 bis 1 Gew.-%: Katalysator, bevorzugt Triethylendiamin
sowie gegebenenfalls Hilfsstotte (d).

Die A-Komponente weist bevorzugt eine Hydroxylzahl von 47 mg KOH/g auf.

Bevorzugt wird B-Komponente zur Herstellung der transparenten, kompakten Schuhteile eingesetzt:

Prepolymer auf der Basis von
- 20 bis 40 Gew.-%: 4,4' Diphenylmethandiisocyanat (Rein MDI)
- 59 bis 80 Gew.-%: Polyoxypropylenglykol-Diol mit 20 % Polyoxyethylenglykol Endblock und einem Molekulargewicht von 4000 g/mol,
- 0,01 bis 1 Gew-%: Stabilisator, bevorzugt Diglykolbisformiat
Der NCO-Gehalt der B-Komponente beträgt bevorzugt 6,7 %.

Die nach dem erfindungsgemäßen Verfahren hergestellten kompakten Schuhteile weisen üblicherweise eine Dichte von 0,95 bis 1,20 g/cm³ auf.

Die erfindungsgemäßen Schuhteile weisen insbesondere folgende Vorteile auf:
- Die Sohlenteile sind transparent und lassen sich nahezu beliebig einfärben.
- Die Sohlenteile haben nur geringen Abrieb und eine gute Rutschfestigkeit.
- Das Dauerbiegeverhalten ist auch bei tiefen Temperaturen (-15°C) hervorragend.
- Die Schuhteile weisen eine gute Haftung zu angeschäumten Schaumstoffen, insbesondere Schaumstoffen die mit gegenüber Isocyanaten reaktiven Verbindungen auf der Basis von Polyetherpolyolen hergestellt werden, auf.

## Patentansprüche

1. Verfahren zur Herstellung von Formteilen für Schuhe enthaltend kompakte, transparente Schuhteile auf der Basis von Polyisocyanat-Polyadditionsprodukten sowie daran haftend Schaumstoffe auf der Basis von Polyisocyanat-Polyadditionsprodukten, **dadurch gekennzeichnet, daß** man in einem ersten Schritt durch Umsetzung von (a) Prepolymer auf der Basis von MDI und einem Polyether mit einer Hydroxylzahl von 20 bis 40 mgKOH/g und einem Molekulargewicht von 3500 bis 5000 g/mol mit (b) gegenüber Isocyanaten reaktiven Verbindungen enthaltend mindestens eine aromatische organische Verbindung (i) mit mindestens zwei primären Aminogruppen in einer offenen Form mittels einer Niederdruck-Gießmaschine kompakte, transparente Schuhteile herstellt und anschließend in einem zweiten Schritt durch Umsetzung von (a) Isocyanaten mit (b) gegenüber Isocyanaten reaktiven Verbindungen in Gegenwart von (e) Treibmitteln in einer geschlossenen Form mittels einer Niederdruck-Gießmaschine haftend an die kompakten, transparenten Schuhteile einen Schaumstoff auf der Basis von Polyisocyanat-Polyadditionsprodukten herstellt.

2. Formteile für Schuhe erhältlich durch ein Verfahren gemäß Anspruch 1.

## Claims

1. A process for the production of shaped articles for shoes, comprising compact, transparent shoe parts based on polyisocyanate polyaddition products and foams adhering thereto and based on polyisocyanate polyaddition products, wherein compact, transparent shoe parts are produced in a first step by reacting (a) a prepolymer based on MDI and a polyether having a hydroxyl number of from 20 to 40 mg KOH/g and a molecular weight of from 3500 to 5000 g/mol with (b) compounds reactive toward isocyanates and comprising at least one aromatic organic compound (i) having at least two primary amino groups in an open mold by means of a low-pressure molding apparatus, and then, in a second step, a foam based on polyisocyanate polyaddition products is produced, adhering to the compact, transparent shoe parts, by reacting (a) isocyanates with (b) compounds reactive toward isocyanates, in the presence of (e) blowing agents in a closed mold by means of a low-pressure molding apparatus.

2. A shaped article for shoes, obtainable by a process according to claim 1.

## Revendications

1. Procédé de fabrication de pièces façonnées pour chaussures comprenant des parties de chaussure transparentes, compactes, à base de produits de polyaddition de polyisocyanate ainsi que des mousses adhérant dessus, à base de produits de polyaddition de polyisocyanate, **caractérisé en ce que**, dans une première étape, on prépare des parties de chaussure transparentes, compactes, par réaction (a) d'un prépolymère à base de MDI et d'un polyéther ayant un indice d'hydroxyle de 20 à 40 mg de KOH/g et un poids moléculaire de 3500 à 5000 g/mole avec (b) des composés réactifs vis-à-vis des isocyanates, contenant au moins un composé organique aromatique (i) comportant au moins deux groupes amino primaires, dans un moule ouvert et au moyen d'une machine de coulage à basse pression et ensuite, dans une deuxième étape, on prépare une mousse à base de produits de polyaddition de polyisocyanate par réaction (a) d'isocyanates avec (b) des composés réactifs vis-à-vis des isocyanates en présence d'agents gonflants (e), dans un moule fermé et au moyen d'une machine de coulage à basse pression, de manière qu'elle adhère aux parties de chaussure transparentes, compactes.

2. Pièces façonnées pour chaussures que l'on peut obtenir par un procédé suivant la revendication 1.
